# EUROPÄISCHE PATENTANMELDUNG

(11) **EP 4 563 617 A1**
(43) Veröffentlichungstag der Anmeldung: **04.06.2025**
(21) Anmeldenummer: 23213025.2
(22) Anmeldetag: 29.11.2023
(51) Int. Cl.: C08G 63/91, C09D 133/06, C09D 133/08, C09D 167/00

(54) **HÄRTBARE ZUSAMMENSETZUNGEN ENTHALTEND FUNKTIONELLE POLYESTER UND ALDIMINE**

(71) Anmelder: Sika Technology AG, 6340 Baar (CH)
(72) Erfinder: SCHEURER, Rouven, 8483 Kollbrunn (CH); HÄBERLE, Hans, 78262 Gailingen (DE); BURCKHARDT, Urs, 8049 Zürich (CH)
(74) Vertreter: Sika Patent Attorneys

(57) **Zusammenfassung**

Gegenstand der Erfindung ist eine härtbare Zusammensetzung umfassend mindestens ein Polyesterpolymer A mit Ketoestergruppen der Formel (I) mit einer mittleren Funktionalität von mindestens 2 und einem mittleren Equivalentgewicht von mindestens 400 g/eq, mindestens eine Verbindung B mit Ketoestergruppen der Formel (I) und einem Equivalentgewicht von 114 bis 250 g/eq und mindestens ein Aldimin L mit Aldimingruppen der Formel (II) und einem Aldimin-Equivalentgewicht von 110 bis 350 g/eq, wobei das Gewichtsverhältnis zwischen Verbindungen B und Polyesterpolymeren A bei 25/75 bis 85/15 liegt, und wobei das Verhältnis zwischen der Anzahl Ketoestergruppen der Formel (I) und der Anzahl Aldimingruppen der Formel (II) bei 2 bis 3 liegt.

Die Zusammensetzung ist frei von toxischen Inhaltsstoffen, nicht empfindlich auf Feuchtigkeit und härtet bei Umgebungsbedingungen ohne Emissionen und störende Gerüche zu einem zähelastischen Polymer von hoher Härte, hohem Weiterreisswiderstand und guter Dehnbarkeit. Die Zusammensetzung ist insbesondere geeignet als zähelastischer Klebstoff, Dichtstoff oder Beschichtung.

## Beschreibung

### Technisches Gebiet

Die Erfindung betrifft bei Raumtemperatur härtbare Zusammensetzungen und ihre Verwendung als zähelastische Klebstoffe, Dichtstoffe oder Beschichtungen.

### Stand der Technik

Härtbare Polymerzusammensetzungen, die zähelastische Eigenschaften erzielen und beispielsweise als Klebstoffe, Dichtstoffe oder Beschichtungen eingesetzt werden können, sind bekannt. Als zähelastisch werden dabei Produkte mit einer Shore Härte ab etwa D50, einer Bruchdehnung von etwa 10 % oder mehr und einem hohen Weiterreisswiderstand bezeichnet.

Epoxidharz-Zusammensetzungen ermöglichen Produkte mit hoher Härte und hohen Haftkräften. Sie verfügen meist aber kaum über Dehnbarkeit und sind nur in Ausnahmefällen zähelastisch formuliert. Zudem neigen sie bei grossflächiger Applikation zu Blushing, insbesondere bei tiefer Temperatur und hoher Luftfeuchtigkeit, was sich in fleckigen, unebenen oder klebrigen Oberflächen zeigt. Zudem sind die darin enthaltenen Epoxidharze und Amine oft gesundheitsschädlich. Polyurethan-Zusammensetzungen können von zähelastisch bis zu ausgeprägt elastisch formuliert werden. Sie sind aber empfindlich gegen Feuchtigkeit während der Lagerung, Applikation und Aushärtung, wobei insbesondere Produkte mit hoher Endhärte zu Blasenbildung neigen und grosse Mengen an toxischen monomeren Isocyanaten enthalten.

Weiterhin bekannt sind Zusammensetzungen, welche über die Hydrolyse und Kondensation von Silangruppen vernetzen. Diese sind typischerweise eher spröde mit geringem Weiterreisswiderstand und enthalten meist hohe Mengen an toxischen monomeren Silanen. Sie sind ebenfalls empfindlich gegen Feuchtigkeit bei der Lagerung, und bei der Aushärtung werden flüchtige Alkohole freigesetzt, wodurch unerwünschte Emissionen entstehen.

US 5,288,804 beschreibt lösemittelbasierte Lacke auf der Basis von Acetoacetat-funktionellen Acrylatpolymeren, welche mit aromatischen Polyaldiminen ausgehärtet werden. US 6,297,320 beschreibt lösemittelbasierte Korrosionsschutz-Lacke auf der Basis von Acetoacetat-funktionellen Acrylatpolymeren und niedrigmolekularen Acetoacetaten als Reaktivverdünner, welche mit aliphatischen Ketiminen ausgehärtet werden. EP 1,358,286 beschreibt lösemittelbasierte Lacke auf der Basis von Acetoacetat-funktionellen Epoxidharzen, welche mit einem Ketiminfunktionellen Acrylat ausgehärtet werden, wobei Polyacetoacetate als Reaktivverdünner mitverwendet werden. Diese beschriebenen Lacke verursachen hohe Emissionen, sind kaum dehnbar und nicht zähelastisch.

### Darstellung der Erfindung

Aufgabe der vorliegenden Erfindung ist es, eine bei Raumtemperatur härtbare Polymerzusammensetzung zur Verfügung zu stellen, welche eine ausgeprägte Zähelastizität ermöglicht und die Nachteile des Standes der Technik in Bezug auf toxische Inhaltsstoffe, Feuchteempfindlichkeit und Emissionen überwindet. Überraschenderweise wird diese Aufgabe mit einer härtbaren Zusammensetzung wie in Anspruch 1 beschrieben gelöst. Die Zusammensetzung umfasst mindestens ein Polyesterpolymer A mit Ketoestergruppen der Formel (I), mindestens eine Verbindung B mit Ketoestergruppen der Formel (I) und mindestens ein Aldimin L mit Aldimingruppen der Formel (II). Dabei liegt das Gewichtsverhältnis zwischen Verbindungen B und Polyesterpolymeren A bei 25/75 bis 85/15, und das Verhältnis zwischen der Anzahl Ketoestergruppen der Formel (I) und der Anzahl Aldimingruppen der Formel (II) liegt bei 2 bis 3.

Die erfindungsgemässe härtbare Zusammensetzung basiert auf gut zugänglichen Ausgangsstoffen und ist einfach in der Handhabung, da sie frei von toxischen Inhaltsstoffen und nicht empfindlich auf Feuchtigkeit ist, weder bei der Lagerung noch bei der Applikation und Aushärtung. Sie härtet bei Raumtemperatur schnell und störungsfrei ohne Emissionen und Gerüche zu einem nicht-klebrigen Polymer mit hervorragenden mechanischen Eigenschaften. Insbesondere entsteht ein hochwertiges vernetztes Polymer mit ausgeprägt zähelastischen Eigenschaften, welches eine hohe Härte mit einem hohen Weiterreisswiderstand und einer guten Dehnbarkeit vereint. Die Kombination dieser Eigenschaften ist aussergewöhnlich und kann aus den im Stand der Technik beschriebenen Systemen nicht abgeleitet werden. Die Inhaltsstoffe der erfindungsgemässen Zusammensetzung sind insbesondere bei Raumtemperatur flüssig und verhältnismässig niedrigviskos, so dass die Zusammensetzung auch ohne Lösemittel bei Raumtemperatur gut verarbeitbar ist. Überraschenderweise härtet die Zusammensetzung vollständig geruchsfrei aus, auch dann, wenn sie Aldimine enthält, die von flüchtigen Aldehyden wie Benzaldehyd abgeleitet sind. Dies deutet darauf hin, dass der dem Aldimin zugrunde liegende Aldehyd nicht freigesetzt, sondern ins Polymer eingebunden wird und somit dauerhaft in der ausgehärteten Zusammensetzung verbleibt.

Die erfindungsgemässe Zusammensetzung ist besonders geeignet für die Verwendung als Klebstoff, Dichtstoff oder Beschichtung, insbesondere für Anwendungen, bei denen eine hohe Härte und Zähelastizität gefordert sind, sowie für Anwendungen, wo zusätzliche Aspekte wie eine geringe Toxizität der Inhaltsstoffe, Unempfindlichkeit gegenüber Feuchtigkeit, eine schnelle Aushärtung bei Umgebungsbedingungen oder geringe Emissionen wichtig sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- mindestens ein Polyesterpolymer **A** mit Ketoestergruppen der Formel (I), welches in Bezug auf diese Reaktivgruppen eine mittlere Funktionalität von mindestens 2 und ein mittleres Equivalentgewicht von mindestens 400 g/eq aufweist,
- mindestens eine Verbindung **B** mit Ketoestergruppen der Formel (I), welche in Bezug auf diese Reaktivgruppen ein Equivalentgewicht von 114 bis 250 g/eq aufweist, 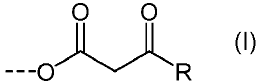 wobei R für einen einwertigen Kohlenwasserstoffrest mit 1 bis 10 C-Atomen steht, und
- mindestens ein Aldimin **L** mit Aldimingruppen der Formel (II) und einem Aldimin-Equivalentgewicht von 110 bis 350 g/eq, 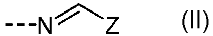 wobei Z für einen aromatischen oder heteroaromatischen fünf- oder sechsgliedrigen Ring steht, der gegebenenfalls substituiert und/oder anelliert ist und insgesamt 4 bis 25 C-Atome umfasst,
wobei das Gewichtsverhältnis zwischen Verbindungen **B** und Polyesterpolymeren **A** bei 25/75 bis 85/15, bevorzugt 30/70 bis 75/25, liegt, und wobei das Verhältnis zwischen der Anzahl Ketoestergruppen der Formel (I) und der Anzahl Aldimingruppen der Formel (II) in der gesamten Zusammensetzung bei 2 bis 3 liegt.

Eine gestrichelte Linie in den Formeln in diesem Dokument stellt jeweils die Bindung zwischen einem Substituenten und dem zugehörigen Molekülrest dar.

Als "Polyesterpolymer" wird ein Polymer mit Estergruppen im der Polymerhauptkette bezeichnet. Typischerweise wird es durch Polykondensationsreaktionen von Polyolen mit Polycarbonsäuren bzw. -estern hergestellt oder aus natürlichen Glyceriden gewonnen. Nicht als Polyesterpolymer im Sinne der Erfindung gelten Polymerisate von ungesättigten Estergruppen-haltigen Verbindungen wie beispielsweise (Meth)acrylaten oder Vinylestern, deren Estergruppen nicht Teil der Polymerhauptkette sind, sondern sich in den Seitenketten befinden.

Mit "Poly" beginnende Substanznamen wie Polyaldimin oder Polyol bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen.

Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

In der härtbaren Zusammensetzung liegt das Gewichtsverhältnis zwischen Verbindungen **B** und Polyesterpolymeren **A** im Bereich von 25/75 bis 85/15, bevorzugt 30/70 bis 75/25. Die Kombination aus verhältnismässig grossem Polyesterpolymer **A** und verhältnismässig kleiner Verbindung **B** ermöglicht im beanspruchten Gewichtsverhältnis eine ausgeprägte Zähelastizität mit aussergewönlich hohen Werten für den Weiterreisswiderstand bei hoher Dehnbarkeit und hoher Härte. Bei einem geringeren Gehalt an Verbindungen **B** sind Härte und Weiterreisswiderstand markant geringer, und bei einem höheren Gehalt an Verbindungen **B** wird zwar eine hohe Härte erreicht, aber die Dehnbarkeit und/oder der Weiterreisswiderstand sind deutlich geringer.

In der härtbaren Zusammensetzung liegt das Verhältnis zwischen der Anzahl Ketoestergruppen der Formel (I) und der Anzahl Aldimingruppen der Formel (II) bei 2 bis 3. Überraschenderweise werden in diesem Bereich besonders gute mechanischen Eigenschaften erhalten. Bevorzugt liegt das Verhältnis zwischen der Anzahl Ketoestergruppen der Formel (I) und der Anzahl Aldimingruppen der Formel (II) bei 2.3 bis 2.7, insbesondere bei etwa 2.5.

Das Polyesterpolymer **A** und die Verbindung **B** enthalten Ketoestergruppen der Formel (I), 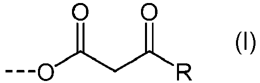 wobei R für einen einwertigen Kohlenwasserstoffrest mit 1 bis 10 C-Atomen steht.

Bevorzugt steht R für Methyl, Ethyl, Propyl, Isopropyl, Butyl oder Phenyl, insbesondere für Methyl oder Phenyl.

Besonders bevorzugt steht R für Methyl und die Ketoestergruppen der Formel (I) stehen somit für Acetoacetatgruppen. Polyesterpolymere **A** und Verbindungen **B** mit Acetoacetatgruppen sind besonders einfach zugänglich und ermöglichen Zusammensetzungen mit besonders schneller Aushärtung.

Das Polyesterpolymer **A** weist eine mittlere Funktionalität von mindestens 2 und ein mittleres Equivalentgewicht von mindestens 400 g/eq auf. Dies ermöglicht eine hohe Dehnbarkeit und Zähigkeit der ausgehärteten Zusammensetzung.

Bevorzugt weist das Polyesterpolymer **A** eine mittlere Funktionalität von 2 bis 3 auf.

Bevorzugt weist das Polyesterpolymer **A** ein mittleres Equivalentgewicht von 400 bis 2'500 g/eq, insbesondere 450 bis 1'500 g/eq, auf.

Bevorzugt weist das Polyesterpolymer **A** ein mittleres Molekulargewicht Mₙ von 800 bis 5'000 g/mol, insbesondere 1'000 bis 3'000 g/mol, auf.

Besonders bevorzugt weist das Polyesterpolymer **A** eine mittlere Funktionalität von 2 bis 3 und ein mittleres Equivalentgewicht von 400 bis 2'500 g/eq, insbesondere 450 bis 1'500 g/eq, auf.

Bevorzugt wird das Polyesterpolymer **A** erhalten aus der Umesterung von mindestens einem Polyesterpolyol mit mindestens einem 1 ,3-Ketoester der Formel (IV), 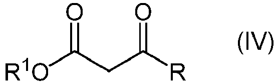 wobei R¹ für C₁₋₆ Alkyl steht und R die bereits genannten Bedeutungen aufweist. Bevorzugt steht R¹ für Methyl, Ethyl oder tert-Butyl, besonders bevorzugt für Ethyl oder tert-Butyl, insbesondere für Ethyl.

Bevorzugt erfolgt die Umesterung bei einer Temperatur im Bereich von 50 bis 180 °C unter destillativer Entfernung des freigesetzten Alkohols R¹OH und gegebenenfalls Fragmentierungsprodukten davon, gegebenenfalls unter Vakuum und gegebenenfalls in Anwesenheit eines geeigneten Katalysators.

Ebenfalls möglich ist die Herstellung eines Polyesterpolymers **A**, indem das Polyesterpolyol mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

In einer bevorzugten Ausführungsform der Erfindung ist das Polyesterpolymer **A** abgeleitet von einem amorphen, bei Raumtemperatur flüssigen Polyesterpolyol.

Bevorzugt ist ein amorphes, gesättigtes, bei Raumtemperatur flüssiges Polyesterdiol oder -triol, insbesondere aus der Umsetzung von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol, Trimethylolpropan oder Glycerin.

Damit werden besonders gut verarbeitbare Zusammensetzungen mit besonders guter Wasserbeständigkeit nach der Aushärtung erhalten.

In einer weiteren bevorzugten Ausführungsform der Erfindung ist das Polyesterpolymer **A** ein Umsetzungsprodukt von Rizinusöl.

Ein solches Polyesterpolymer **A** basiert insbesondere auf einem von Rizinusöl abgeleiteten Polyesterpolyol, wie es beispielsweise als Setathane^{®} D 1150 (von Allnex) kommerziell erhältlich ist. Es ermöglicht besonders hohe Festigkeiten und ist wegen seines hohen Anteils an bio-basiertem Kohlenstoff besonders nachhaltig.

In einer weiteren bevorzugten Ausführungsform der Erfindung ist das Polyesterpolymer **A** ein amorpher Polyester aus der Veresterung einer Dimerfettsäure oder Trimerfettsäure oder eines Dimerfettalkohols oder Trimerfettalkohols.

Ein solches Polyesterpolymer **A** ermöglicht besonders hohe Festigkeiten und ist wegen seines hohen Anteils an bio-basiertem Kohlenstoff besonders nachhaltig.

Bevorzugt ist das Polyesterpolymer **A** bei Raumtemperatur flüssig. Insbesondere weist es eine Viskosität bei 20 °C von 0.5 bis 100 Pa s, bevorzugt 0.5 bis 50 Pa s, insbesondere 1 bis 20 Pa s, auf, gemessen mittels Kegel-Platte Viskosimeter mit Kegeldurchmesser 10 mm, Kegelwinkel 1°, Kegelspitze-Platte-Abstand 0.05 mm und Scherrate 10 s⁻¹. Ein solches Polymer ist bei Umgebungstemperaturen auch ohne Zusatz von Lösemitteln oder Verdünnern gut handhabbar und ermöglicht gut verarbeitbare Zusammensetzungen.

Die härtbare Zusammensetzung umfasst weiterhin mindestens eine Verbindung **B** mit Ketoestergruppen der Formel (I) und einem Equivalentgewicht von 114 bis 250 g/eq.

Bevorzugt hat die Verbindung **B** zwei bis vier, insbesondere zwei bis drei, Ketoestergruppen der Formel (I).

Bevorzugt weist die Verbindung **B ein** Equivalentgewicht von 114 bis 200 g/eq auf.

Die Verbindung **B** ist insbesondere ein Ester eines Polyalkohols mit mindestens einem 1,3-Ketoester der Formel (IV) unter Freisetzung und Entfernung des Alkohols der Formel R¹OH und gegebenenfalls Fragmentierungsprodukten davon, hergestellt wie vorgängig für ein Polyesterpolymer **A** mit Ketoestergruppen der Formel (I) beschrieben.

Als Polyalkohol für die Herstellung einer Verbindung **B** geeignet sind insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiol mit mittlerem Molekulargewicht Mₙ von 150 bis 300 g/mol, 1,3-Cyclohexandimethanol, 1,4-Cyclohexandimethanol, Isosorbid, 2,5-Bis(hydroxymethyl)tetrahydrofuran, 2,5(6)-Bis(hydroxymethyl)bicyclo[2.2.1]heptan, 3(4),8(9)-Bis(hydroxymethyl)tricyclo[5.2.1.0^{2,6}]decan, hydriertes Bisphenol F, hydriertes Bisphenol A, Glycerin, 1,1,1-Trimethylolethan, 1,1,1-Trimethylolpropan, ethoxyliertes oder insbesondere propoxyliertes Glycerin, oder ethoxyliertes oder insbesondere propoxyliertes 1,1,1-Trimethylolpropan.

Bevorzugt sind 1,4-Butandiol, 2-Methyl-1,3-propandiol, 1,5-Pentandiol, Neopentylglykol, 1,6-Hexandiol, Isosorbid, hydriertes Bisphenol A, Glycerin, 1,1,1-Trimethylolethan, 1,1,1-Trimethylolpropan oder propoxyliertes 1,1,1-Trimethylolpropan mit mittlerem Molekulargewicht Mₙ von 250 bis 500 g/mol.

Besonders bevorzugt ist Glycerin, 1,1,1-Trimethylolpropan oder Isosorbid.

Bevorzugt ist die Verbindung **B** ausgewählt aus der Liste bestehend aus 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Isosorbid-diacetoacetat, 4,4'-Isopropyliden-bis(cyclohexanol)diacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat und dem Triacetoacetat von propoxyliertem 1,1,1-Trimethylolpropan mit insgesamt einem mittleren Molekulargewicht Mₙ von 500 bis 750 g/mol. Diese Verbindungen **B** sind gut zugänglich und ermöglichen hohe Härten bei hoher Zähelastizität.

Besonders bevorzugt ist Glycerin-triacetoacetat oder ein Gemisch aus Glycerin-diacetoacetat und Glycerin-triacetoacetat. Eine solche Verbindung **B** ermöglicht hohe Festigkeiten bei guter Verarbeitbarkeit.

Weiterhin besonders bevorzugt ist 1,1,1-Trimethylolpropan-triacetoacetat. Diese Verbindung **B** ermöglicht einen besonders hohen Weiterreisswiderstand. Weiterhin besonders bevorzugt ist Isosorbid-diacetoacetat. Damit wird eine besonders hohe Festigkeit und ein besonders hoher Weiterreisswiderstand erhalten, insbesondere in Kombination mit einem Polyesterpolymer **A** basierend auf einer Dimer- oder Trimerfettsäure.

Die härtbare Zusammensetzung umfasst weiterhin mindestens ein Aldimin **L** mit Aldimingruppen der Formel (II) und einem Aldimin-Equivalentgewicht von 110 bis 350 g/eq.

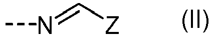

Bevorzugt hat das Aldimin **L** eins bis drei, insbesondere zwei bis drei, Aldimingruppen der Formel (II).

Bevorzugt steht Z in den Aldimingruppen der Formel (II) für einen gegebenenfalls substituierten Phenylrest, einen gegebenenfalls substituierten Naphthylrest oder einen gegebenenfalls substituierten Furylrest, Pyridinrest, Pyrrolrest, Indolrest oder Thiophenrest, insbesondere für einen gegebenenfalls substituierten Phenylrest, einen gegebenenfalls substituierten Naphthylrest oder einen gegebenenfalls substituierten Furylrest.

Insbesondere ist Z ausgewählt aus der Liste bestehend aus Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2-Hydroxyphenyl, 3-Hydroxyphenyl, 4-Hydroxyphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 4-Hydroxy-3-methoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl und 5-Hydroxymethyl-2-furyl.

Besonders bevorzugt sind Phenyl, 2-Methylphenyl, 3-Methylphenyl, 4-Methylphenyl, 4-Methoxyphenyl, 3,4-Dimethoxyphenyl, 2-Furyl oder 5-Hydroxymethyl-2-furyl.

Am meisten bevorzugt steht Z für Phenyl. Diese Aldimine sind abgeleitet von Benzaldehyd. Sie sind besonders einfach verfügbar und ermöglichen eine besonders schnelle Aushärtung.

Aldimine abgeleitet von Benzaldehyd oder anderen flüchtigen Aldehyden verursachen in härtbaren Zusammensetzungen typischerweise einen starken, unangenehmen Geruch, welcher während und nach der Applikation deutlich wahrnehmbar ist und ihre Verwendung stark einschränkt. Im Fall der erfindungsgemässen härtbaren Zusammensetzung entsteht überraschenderweise aber kein Aldehyd-Geruch, was besonders vorteilhaft ist, da die Zusammensetzung ohne Einschränkung auch in geruchssensitiven Anwendungen eingesetzt werden kann, beispielsweise in Gebäudeinnenräumen oder in Automobilen.

Bevorzugt als Aldimin **L** ist ein Aldimin der Formel (III), 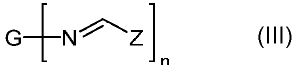 wobei n für 2 oder 3 und G für einen n-wertigen organischen Rest mit 2 bis 25 C-Atomen stehen und Z die bereits genannten Bedeutungen aufweist.

Bevorzugt steht G für einen zweiwertigen Kohlenwasserstoffrest mit 5 bis 15 C-Atomen oder für einen zwei- oder dreiwertigen Polyoxyalkylen-Rest mit einem mittleren Molekulargewicht Mₙ von 160 bis 500 g/mol.

Das Aldimin der Formel (III) ist abgeleitet von einem primären Amin und einem aromatischen oder heteroaromatischen Aldehyd, aus welchen es durch eine Kondensationsreaktion erhältlich ist.

Als primäres Amin bevorzugt sind handelsübliche aliphatische oder cycloaliphatische primäre Amine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)-methan, 2,5(6)-Bis(aminomethyl)bicyclo[2.2.1]heptan (NBDA), 3(4),8(9)-Bis(aminomethyl)tricyclo[5.2.1.0^{2,6}]decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder-triamine sind Jeffamine^{®} D-230, Jeffamine^{®} D-400 oder Jeffamine^{®} T-403 (alle von Huntsman), sowie entsprechende Typen von BASF oder Nitroil.

Als aromatischer oder heteroaromatischer Aldehyd bevorzugt sind Benzaldehyd, 2-Tolualdehyd, 3-Tolualdehyd, 4-Tolualdehyd, 4-Ethylbenzaldehyd, 4-Isopropylbenzaldehyd, 4-tert-Butylbenzaldehyd, 4-C₁₀₋₁₄-Alkylbenzaldehyd, Salicylaldehyd, alkoxylierter Salicylaldehyd wie insbesondere 2-(2-Hydroxyethoxy)benzaldehyd, 3-Hydroxybenzaldehyd, 4-Hydroxybenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 4-Hydroxy-3-methoxybenzaldehyd (Vanillin), 2,4,6-Trimethylbenzaldehyd, 2,4,5-Trimethoxybenzaldehyd, 2,4,6-Trimethoxybenzaldehyd, 3,4,5-Trimethoxybenzaldehyd, 1-Naphthaldehyd, 2-Naphthaldehyd, Furfural, 5-Methylfurfural oder 5-Hydroxymethylfurfural.

Besonders bevorzugt ist Benzaldehyd, Tolualdehyd, 4-Methoxybenzaldehyd, Furfural oder 5-Hydroxymethylfurfural.

Am meisten bevorzugt ist Benzaldehyd.

Aldimine der Formel (III) zeigen teilweise eine deutliche Neigung zum Kristallisieren. Bevorzugt sind Aldimine der Formel (III), welche als solche oder als Mischung untereinander bei Raumtemperatur ohne Zusatz von Lösemitteln oder Verdünnern dauerhaft flüssig sind. Solche Aldimine ermöglichen Zusammensetzungen mit geringer Emission.

Bevorzugte Aldimine der Formel (III) sind ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondiamin, N,N'-Dibenzyliden-4,4'-methylen-bis(cyclohexylamin), N,N'-Dibenzylidenpolyoxypropylendiaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, 4-Methoxybenzaldehyd, Furfural und 5-Hydroxymethylfurfural anstelle von Benzaldehyd.

Besonders bevorzugt sind N,N'-Dibenzyliden-1,5-pentandiamin, Mischungen von N,N'-Dibenzyliden-1,5-pentandiamin und N,N'-Dibenzyliden-1,6-hexandiamin, insbesondere im Molverhältnis von etwa 1:1, N,N'-Dibenzyliden-2-methyl-1,5-pentandiamin, N,N'-Dibenzylidenpolyoxypropylendiamine mit mittlerem Molekulargewicht Mₙ von 350 bis 750 g/mol, sowie Mischungen davon mit einem weiteren Aldimin der Formel (III). Diese Aldimine oder Aldimin-Mischungen neigen kaum zum Kristallisieren und sind bei Raumtemperatur typischerweise dauerhaft flüssig.

Ganz besonders bevorzugt ist N,N'-Dibenzyliden-1,5-pentandiamin. Damit werden besonders hohe Festigkeiten erhalten.

Weiterhin ganz besonders bevorzugt sind N,N'-Dibenzylidenpolyoxypropylendiamine mit mittlerem Molekulargewicht Mₙ von 350 bis 750 g/mol, insbesondere 400 bis 500 g/mol. Damit wird eine besonders gute Dehnbarkeit und Zähelastizität erhalten.

Bevorzugt sind das Polyesterpolymer **A**, die Verbindung **B** und das Aldimin **L** jeweils bei Raumtemperatur flüssig. Insbesondere sind sie bei Raumtemperatur ohne Zusatz von Lösemitteln oder Verdünnern im flüssigen Zustand gut handhabbar. Eine solche Zusammensetzung verfügt über eine gute Verarbeitbarkeit bei besonders wenig Emission.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, MetallPulver, beispielsweise von Aluminium, Kupfer, Eisen, Silber oder Stahl, PVC-Pulver oder Hohlkugeln,
- Fasern, insbesondere Glasfasern, Kohlefasern, Metallfasern, Keramikfasern, Hanffasern, Zellulosefasern oder Kunststofffasern wie Polyamidfasern, Polyethylenfasern oder Polypropylenfasern,
- Nanofüllstoffe oder Nanofasern wie Graphen oder Carbon Nanotubes,
- Farbstoffe,
- Pigmente, insbesondere Titandioxid, Chromoxid, Eisenoxide oder organische Pigmente,
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicarboxylat, Isophthalate, Trimellitate, Adipate, insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole, gegebenenfalls mit blockierten Hydroxylgruppen, insbesondere in der Form von Acetylgruppen, sowie organische Sulfonate oder Phosphate, insbesondere Diphenylkresylphosphat (DPK) oder Tris-2-ethyl-hexylphosphat (TOF), Polybutene, Polyisobutene oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind,
- Lösemittel,
- Modifizierungsmittel wie Kohlenwasserstoffharze, natürliche oder synthetische Wachse oder Bitumen,
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene,
- Trocknungsmittel, insbesondere Molekularsiebe, Calciumoxid, Mono-Oxazolidine wie Incozol^{®} 2 (von Incorez), Orthoester oder Alkoxysilane,
- Haftvermittler, insbesondere Titanate oder Organoalkoxysilane wie Aminosilane, Mercaptosilane, Epoxysilane, , (Meth)acrylsilane, Carbamatosilane, Alkylsilane, S-(Alkylcarbonyl)mercaptosilane oder oligomere Formen dieser Silane,
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Styrol, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO),
- flammhemmende Substanzen, insbesondere die bereits genannten Füllstoffe Aluminiumhydroxid oder Magnesiumhydroxid, organische Phosphorsäureester, Ammoniumpolyphosphate, expandierender Graphit, Melaminverbindungen, Borverbindungen oder Antimonverbindungen,
- Additive, insbesondere Netzmittel, Verlaufmittel, Entschäumer, Entlüfter, Stabilisatoren gegen Oxidation, Wärme, Licht oder UV-Strahlung oder Biozide,
sowie weitere üblicherweise in härtbaren Zusammensetzungen eingesetzte Substanzen.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel. Eine solche Zusammensetzung verursacht besonders wenig Emissionen.

Die härtbare Zusammensetzung ist bevorzugt nicht wasserbasiert, das heisst sie liegt weder als Lösung noch als Emulsion oder Dispersion in Wasser vor. Sie ist bevorzugt weitgehend frei von Wasser oder enthält nur einen geringen Gehalt an Wasser. Eine solche Zusammensetzung härtet unabhängig von der Umgebungsfeuchte schnell aus, kann in dicken Schichten und/oder zwischen wasserdichten Substraten eingesetzt werden und zeigt kaum Schwund bei der Aushärtung. Bevorzugt enthält die härtbare Zusammensetzung weniger als 5 Gewichts-%, bevorzugt weniger als 2 Gewichts-%, insbesondere weniger als 1 Gewichts-%, Wasser bezogen auf die gesamte Zusammensetzung.

Bevorzugt wird die härtbare Zusammensetzung in Form eines Zweikomponentensystems eingesetzt.

Bevorzugt umfasst die Zusammensetzung eine Komponente **K1** und eine Komponente **K2**, welche jeweils für sich allein lagerstabil sind und in voneinander getrennten Gebinden gelagert werden, wobei Verbindungen mit Ketoestergruppen der Formel (I) Bestandteil der Komponente **K1** und Aldimine mit Aldimingruppen der Formel (II) Bestandteil der Komponente **K2** sind. Eine solche härtbare Zusammensetzung wird auch als zweikomponentige Zusammensetzung bezeichnet. Die beiden Komponenten **K1** und **K2** sind für sich allein lagerstabil und werden in voneinander getrennten Gebinden gelagert, bis sie kurz vor oder während der Applikation miteinander vermischt werden und somit die Aushärtung beginnt.

Weitere Inhaltsstoffe der Zusammensetzung können in der Komponente **K1** und/oder **K2** enthalten sein. Mit Aldimingruppen der Formel (II) reaktive Substanzen sind bevorzugt ein Bestandteil der Komponente **K1.** Mit Ketoestergruppen der Formel (I) reaktive Substanzen sind bevorzugt ein Bestandteil der Komponente **K2.**

Die Konsistenz der Komponente **K1** und der Komponente **K2** ist geeigneter Weise so, dass die Komponenten bei Umgebungsbedingungen mit einfachen Verfahren gut miteinander vermischt werden können. Dazu sind insbesondere flüssige oder pastöse Komponenten geeignet.

Die Komponente **K1** und die Komponente **K2** der härtbaren Zusammensetzung werden getrennt voneinander hergestellt. Dabei werden die Inhaltsstoffe der jeweiligen Komponente miteinander vermischt, so dass eine makroskopisch homogene Masse entsteht. Die Komponenten **K1** und **K2** werden jeweils in einem separaten Gebinde gelagert. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden alle Inhaltsstoffe, insbesondere als Komponenten **K1** und **K2**, kurz vor oder während der Applikation miteinander vermischt. Das Mischungsverhältnis wird dabei bevorzugt so gewählt, dass das Verhältnis der Anzahl Ketoestergruppen der Formel (I) zur Anzahl Aldimingruppen der Formel (II) im erfindungsgemässen Bereich liegt. In Gewichtsteilen liegt das Mischungsverhältnis typischerweise im Bereich von etwa 50:1 bis 1:5, insbesondere 10:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und dem damit verbundenen Anstieg der Viskosität zu Störungen wie beispielsweise einem ungenügenden Verlauf oder einer verlangsamten oder unvollständigen Haftung zum Substrat kommen kann. Insbesondere soll die Offenzeit der Zusammensetzung während der Applikation nicht überschritten werden.

Als "Offenzeit" wird die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, bevorzugt bei einer Temperatur im Bereich von -5 bis 50 °C, bevorzugt 0 bis 40 °C, insbesondere 5 bis 35 °C.

Mit dem Vermischen der Inhaltsstoffe oder Komponenten beginnt die Zusammensetzung durch die einsetzende chemische Reaktion auszuhärten.

Es kann vermutet werden, dass typischerweise zwei Ketoestergruppen der Formel (I) mit einer Aldimingruppe der Formel (II) unter Freisetzung von Wasser zu einer cycloaliphatische Struktureinheit reagieren. Die Beobachtung, dass beim Einsatz von Aldiminen L abgeleitet von Benzaldehyd während und nach der Aushärtung kein Aldehyd-Geruch feststellbar ist, deutet darauf hin, dass der dem Aldimin zugrunde liegende Aldehyd bei der Aushärtungsreaktion nicht freigesetzt, sondern im Polymer eingebunden wird und somit dauerhaft in der ausgehärteten Zusammensetzung verbleibt.

Die Aushärtung erfolgt bevorzugt bei Umgebungstemperatur, bevorzugt bei einer Temperatur im Bereich von -5 bis 50°C, insbesondere 0 bis 40°C.

Ein weiterer Gegenstand der Erfindung ist die ausgehärtete Zusammensetzung, erhalten aus der härtbaren Zusammensetzung nach dem Vermischen der Inhaltsstoffe oder Komponenten und anschliessendem Aushärten.

Bevorzugt weist die ausgehärtete Zusammensetzung eine gute Dehnbarkeit, einen hohen Weiterreisswiderstand, eine hohe Zugfestigkeit und eine hohe Shore-Härte auf.

Bevorzugt weist die ausgehärtete Zusammensetzung eine Bruchdehnung von mindestens 5 %, bevorzugt mindestens 10 %, besonders bevorzugt mindestens 20 %, insbesondere mindestens 40 %, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung einen Weiterreisswiderstand von mindestens 20 N/mm, insbesondere mindestens 40 N/mm, auf, bestimmt gemäss DIN ISO 34-1 Verfahren B (winkelförmiger Prüfkörper) bei einer Probendicke von 2 mm und einer Zuggeschwindigkeit von 500 mm/min.

Bevorzugt weist die ausgehärtete Zusammensetzung eine Zugfestigkeit von mindestens 8 MPa, bevorzugt mindestens 12 MPa, insbesondere mindestens 15 MPa, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung eine Shore D Härte von mindestens 50, bevorzugt mindestens 65, auf, bestimmt gemäss DIN 53505 an zylindrischen Prüfkörpern (Durchmesser 20 mm, Dicke 5 mm).

Bevorzugt weist die ausgehärtete Zusammensetzung eine Glasübergangstemperatur (Tg) von mindestens 50 °C, bevorzugt mindestens 65 °C, auf, bestimmt mittels DMTA an streifenförmigen Proben (Länge 75 mm, Breite 10 mm, Dicke 2 mm) im Schermodus mit 10 Hz Anregungsfrequenz im Temperaturbereich von -80 bis 120 °C bei einer Heizrate von 5 K/min unter Bestimmung des komplexen Elastizitätsmoduls, wobei ein Maximum in der Kurve für den Verlustwinkel als Tg-Wert abgelesen wird. Ein hoher Tg ermöglicht eine gute Beständigkeit bei hohen Gebrauchstemperaturen.

Insbesondere weist die ausgehärtete Zusammensetzung eine Bruchdehnung von mindestens 5 %, bevorzugt mindestens 10 %, besonders bevorzugt mindestens 20 %, insbesondere mindestens 40 %, und einen Weiterreisswiderstand von mindestens 20 N/mm, insbesondere mindestens 40 N/mm, auf.

Die härtbare Zusammensetzung eignet sich für eine Vielzahl von Verwendungen. Sie wird insbesondere verwendet als Klebstoff, Dichtstoff, Beschichtung, Giessharz oder Spachtelmasse, insbesondere als Klebstoff, Dichtstoff oder Beschichtung.

Ein weiterer Gegenstand der Erfindung ist die Verwendung der härtbaren Zusammensetzung als Klebstoff, Dichtstoff oder Beschichtung, wobei die Inhaltsstoffe oder Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Der Artikel besteht aus der ausgehärteten Zusammensetzung oder ist mit ihr verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen. Viskositäten von weniger als 0.5 Pa s wurden mit einem Kegeldurchmesser von 50 mm und einer Scherrate von 100 s⁻¹ gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen.

Herstellung von Polyesterpolymeren mit Ketoestergruppen der Formel (I):

### Polymer A-1:

500 g (1 mol OH) gesättigtes Polyesterdiol (Oxyester^{®} T 1136, OH-Zahl 112 mg KOH/g, von Evonik) wurde mit 174 g (1.1 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 582.7 g einer klaren, gelblichen Flüssigkeit mit einer Viskosität bei 20 °C von 2.4 Pa·s, einer Acetoacetat-Funktionalität von 2 und einem theoretischen Acetoacetat-Equivalentgewicht von 584 g/eq.

### Polymer A-2:

500 g (1.1 mol OH) amorphes Dimerfettsäure-basiertes Polyesterdiol mit OH-Zahl 123 mg KOH/g wurde mit 156.2 g (1.2 mol) Ethylacetoacetat und 0.6 g Tetra-n-butyltitanat (Tyzor^{®} TnBT, von Dorf Ketal) versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 608.7 g einer klaren, gelblichen Flüssigkeit mit einer Viskosität bei 20 °C von 14.4 Pa·s, einer Acetoacetat-Funktionalität von 2 und einem theoretischen Acetoacetat-Equivalentgewicht von 540 g/eq.

### Herstellung von Verbindungen mit Ketoestergruppen der Formel (I):

### Verbindung B-1:

92.1 g (1 mol) Glycerin (= 1,2,3-Trihydroxypropan) wurde mit 506 g (3.2 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 327.6 Glycerin-triacetoacetat als klare, gelbliche Flüssigkeit mit einer Viskosität bei 20 °C von 0.12 Pa·s und einem theoretischen Acetoacetat-Equivalentgewicht von 114.7 g/eq.

### Verbindung B-2:

134.2 g (1 mol) 1,1,1-Trimethylolpropan wurde mit 522.1 g (3.3 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 367.3 g 1,1,1-Trimethylolpropan-triacetoacetat als klare, gelbliche Flüssigkeit mit einer Viskosität bei 20 °C von 0.27 Pa·s und einem theoretischen Acetoacetat-Equivalentgewicht von 129 g/eq.

### Verbindung B-3:

146.1 g (1 mol) Isosorbid wurde mit 348.0 g (2.2 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 310.6 g Isosorbid-diacetoacetat als klare, gelbliche Flüssigkeit mit einer Viskosität bei 20 °C von 0.91 Pa·s und einem theoretischen Acetoacetat-Equivalentgewicht von 157 g/eq.

### Verbindung B-4:

104.1 g (1 mol) Neopentylglykol (= 2,2-Dimethyl-1,3-propandiol) wurde mit 348.0 g (2.2 mol) Ethylacetoacetat und 0.45 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 254.1 g Neopentylglykol-diacetoacetat als klare, gelbliche Flüssigkeit mit einer Viskosität bei 20 °C von < 0.05 Pa·s und einem theoretischen Acetoacetat-Equivalentgewicht von 136 g/eq.

### Herstellung von Aldiminen:

### Aldimin L-1:

106.1 g (1 mol) Benzaldehyd wurde unter Stickstoffatmosphäre vorgelegt, unter gutem Rühren mit 124.0 g (1 mol NH₂) Polyoxypropyendiamin (Jeffamine^{®} D-230, von Huntsman) versetzt und anschliessend die flüchtigen Bestandteile bei 80 °C und 10 mbar Vakuum entfernt. Erhalten wurden 210.7 g einer klaren, gelblichen Flüssigkeit mit einer Viskosität bei 20 °C von 0.34 Pa·s, einer Aminzahl von 265 mg KOH/g und einem Aldimin-Equivalentgewicht von 212 g/eq.

### Aldimin L-2:

212.2 g (2 mol) Benzaldehyd wurde unter Stickstoffatmosphäre vorgelegt, unter gutem Rühren mit 102.2 g (1 mol) 1,5-Pentandiamin (von Cathay Biotech) versetzt und anschliessend die flüchtigen Bestandteile bei 80 °C und 10 mbar Vakuum entfernt. Erhalten wurden 286.0 g N,N'-Dibenzyliden-1,5-pentandiamin als klare, gelbliche Flüssigkeit mit einer Viskosität < 0.05 Pa s bei 20 °C, einer Aminzahl von 403 mg KOH/g und einem Aldimin-Equivalentgewicht von 139.2 g/eq.

### Aldimin L-3:

212.2 g (2 mol) Benzaldehyd wurde unter Stickstoffatmosphäre vorgelegt, unter gutem Rühren mit einer Mischung aus 51.1 g (0.5 mol) 1,5-Pentandiamin und 58.1 g (0.5 mol) 1,6-Hexandiamin versetzt und anschliessend die flüchtigen Bestandteile bei 80 °C und 10 mbar Vakuum entfernt. Erhalten wurden 289.8 g einer klaren, gelblichen Flüssigkeit mit einer Viskosität bei 20 °C von 0.09 Pa·s, einer Aminzahl von 393 mg KOH/g und einem Aldimin-Equivalentgewicht von 142.7 g/eq.

### Herstellung von härtbaren Zusammensetzungen:

### Zusammensetzungen Z-1 bis Z-20:

Für jedes Beispiel wurden die in den Tabellen 1 bis 3 angegebenen Inhaltsstoffe der Komponente **K1** in den angegebenen Mengen (in Gewichtsteilen) vermischt und in einem verschlossenen Gebinde aufbewahrt.

Weiterhin wurden die in den Tabellen 1 bis 3 angegebenen Inhaltsstoffe der Komponente **K2** in den angegebenen Mengen (in Gewichtsteilen) vermischt und in einem verschlossenen Gebinde aufbewahrt.

Anschliessend wurden die Komponenten **K1** und **K2** jeder Zusammensetzung mittels eines Zentrifugalmischers (Thinky ARE-250, 2000 U/min, 60 s) vermischt und wie folgt beschrieben geprüft.

Die **Gelierzeit** (Zeitspanne zwischen dem Vermischen der Komponenten und der Gelierung) wurde bestimmt, indem 10 g der vermischten Zusammensetzung mittels eines Spatels in regelmässigen Zeitabständen bewegt wurden, bis die Masse gelierte.

Zur Bestimmung der mechanischen Eigenschaften wurde die Zusammensetzung auf eine PTFE-beschichteten Folie zu einem Film von 2 mm Dicke ausgegossen, dieser durch Lagerung während 14 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf maximale **Zugfestigkeit**, **Bruchdehnung** und **E-Modul 5 %** (zwischen 0.5-5 % Dehnung) geprüft. Weiter wurden einige Prüfkörper zur Bestimmung des **Weiterreisswiderstandes** ausgestanzt und gemäss DIN ISO 34-1, Verfahren B (winkelförmiger Prüfkörper) bei einer Zuggeschwindigkeit von 500 mm/min geprüft.

Die **Shore A** bzw. **D** Härte wurde nach DIN 53505 an zylindrischen Prüfkörpern (Durchmesser 20 mm, Dicke 5 mm) nach einer Lagerzeit von 14 Tagen im Normklima bestimmt.

Der **Tg**-Wert (Glasübergangstemperatur) wurde bestimmt mittels DMTA-Messung an streifenförmigen Proben (Länge 75 mm, Breite 10 mm, Dicke 2 mm), welche 14 d im Normklima gelagert waren, Messung im Schermodus mit 10 Hz Anregungsfrequenz im Temperaturbereich von -80 bis 120 °C bei einer Heizrate von 5 K/min unter Bestimmung des komplexen Elastizitätsmoduls, wobei ein Maximum in der Kurve für den Verlustwinkel tan δ als Tg-Wert abgelesen wurde.

Während der Applikation und Aushärtung der erfindungsgemässen Beispiele war kein Aldehyd-Geruch feststellbar. Es entstanden jeweils geruchsfreie, nicht-klebrige Filme mit einer fehlerfreien, glatten und glänzenden Oberfläche.

Die Resultate sind in den Tabellen 1 bis 3 angegeben.

Die mit "**(Ref.)**" bezeichneten Beispiele sind Vergleichsbeispiele.

**Tabelle 1: Zusammensetzung und Eigenschaften von Z-1 bis Z-8.**

| **Zusammensetzung** | **Z-1 (Ref.)** | **Z-2 (Ref.)** | **Z-3** | **Z-4** | **Z-5** | **Z-6** | **Z-7** | **Z-8** |
|---|---|---|---|---|---|---|---|---|
| **Komponente K1:** | | | | | | | | |
| Polymer **A-1** | 84.7 | 79.1 | 60.4 | 53.4 | 45.9 | 38.0 | 30.0 | 20.0 |
| Verbindung **B-1** | 15.3 | 20.9 | 39.6 | 46.6 | 54.1 | 62.0 | 70.0 | 80.0 |
| **Komponente K2:** | | | | | | | | |
| Aldimin **L-1** | 23.6 | 26.9 | 38.0 | 42.2 | 46.6 | 51.3 | 56.1 | 62.0 |
| Verhältnis (I) / (II) ¹ | 2.5 | 2.5 | 2.5 | 2.5 | 2.5 | 2.5 | 2.5 | 2.5 |
| Gelierzeit [h:min] | 7:00 | 7:00 | 4:50 | 2:40 | 2:30 | 3:00 | 2:15 | 1:30 |
| Zugfestigkeit [MPa] | 4.1 | 7.2 | 18.8 | 13.8 | 19.5 | 45.7 | 53.2 | 59.8 |
| Bruchdehnung [%] | 111 | 106 | 68 | 91 | 68 | 14 | 6 | 3 |
| E-Modul 5% [MPa] | 5.3 | 13.1 | 313 | 125 | 378 | 966 | 1112 | |
| Weiterreisswiderstand [N/mm] | 7 | 13 | 78 | 48 | 83 | 23 | 22 | 26 |
| Shore | 72 A | 64 A | | n.b. | n.b. | | | |
| | 24 D | 31 D | 69 D | | | 80 D | 82 D | 83 D |
| Tg [°C] | n.b. | n.b. | n.b. | 58 | 68 | n.b. | n.b. | n.b. |

| | | | | | | | | |
|---|---|---|---|---|---|---|---|---|
| ¹ Verhältnis der Anzahl Ketoestergruppen der Formel (I) zur Anzahl Aldimingruppen der Formel (II) "n.b." steht für "nicht bestimmt" | | | | | | | | |

**Tabelle 2: Zusammensetzung und Eigenschaften von Z-9 bis Z-14.**

| **Zusammensetzung** | **Z-9** | **Z-10** | **Z-11** | **Z-12** | **Z-13 (Ref.)** | **Z-14 (Ref.)** |
|---|---|---|---|---|---|---|
| **Komponente K1:** | | | | | | |
| Polymer **A-1** | 46.0 | 65.7 | 59.4 | 66.7 | 81.4 | 60.4 |
| Verbindung | **B-2** | **B-1** | **B-4** | **B-3** | **B-3** | **B-1** |
| | 54.0 | 34.3 | 40.6 | 33.3 | 18.6 | 39.6 |
| **Komponente K2:** | | | | | | |
| Aldimin **L-1** | 42.2 | 10.6 | - | - | - | - |
| Aldimin **L-2** | - | 15.9 | 22.3 | - | - | - |
| Aldimin **L-3** | - | - | - | 18.6 | 14.7 | - |
| Ketimin-**1** ¹ | - | - | - | - | - | 30.5 |
| Verhältnis (I) / (II) ² | 2.5 | 2.5 | 2.5 | 2.5 | 2.5 | 2.5 ³ |
| Gelierzeit [h:min] | 3:20 | n.b. | 3:55 | n.b. | n.b. | n.m.4 |
| Zugfestigkeit [MPa] | 29.8 | 17.0 | 21.6 | 21.9 | 10.0 | n.m.4 |
| Bruchdehnung [%] | 40 | 42 | 139 | 123 | 178 | |
| E-Modul 5% [MPa] | 586 | 216 | 149 | 159 | 6.7 | |
| Weiterreisswiderstand [N/mm] | 118 | 46 | 60 | 64 | 11 | n.m.4 |
| Shore | | | 92 A | 97 A | 65 A | n.m.4 |
| | 76 D | 63 D | 60 D | 61 D | 24 D | |
| Tg [°C] | 80 | 90 | 60 | 70 | 30 | n.m.4 |

| | | | | | | |
|---|---|---|---|---|---|---|
| ¹ Diketimin aus Isophorondiamin und Methylisobutylketon ² Verhältnis der Anzahl Ketoestergruppen der Formel (I) zur Anzahl Aldimingruppen der Formel (II) ³ Verhältnis der Anzahl Ketoestergruppen der Formel (I) zur Anzahl Ketimingruppen ⁴ nicht messbar (härtet nicht aus) "n.b." steht für "nicht bestimmt" | | | | | | |

**Tabelle 3: Zusammensetzung und Eigenschaften von Z-15 bis Z-20.**

| **Zusammensetzung** | **Z-15 (Ref.)** | **Z-16** | **Z-17** | **Z-18** | **Z-19** | **Z-20** |
|---|---|---|---|---|---|---|
| **Komponente K1:** | | | | | | |
| Polymer **A-2** | 82.75 | 67.0 | 58.7 | 68.8 | 63.5 | 60.9 |
| Verbindung **B-3** | 17.25 | 33.0 | 41.3 | 31.2 | 36.5 | 39.1 |
| Verbindung **B-4** | - | - | - | - | - | - |
| **Komponente K2:** | | | | | | |
| Aldimin **L-1** | 6.8 | 8.6 | 9.6 | - | - | - |
| Aldimin **L-2** | 10.2 | 12.95 | 14.4 | 18.2 | 16.3 | 20.2 |
| Verhältnis (I) / (II) ¹ | 2.5 | 2.5 | 2.5 | 2.5 | 3.0 | 2.5 |
| Gelierzeit [h:min] | 2:45 | 1:40 | 1:25 | 1:09 | 1:13 | 0:56 |
| Zugfestigkeit [MPa] | 6.7 | 16.5 | 22.5 | 21.8 | 12.0 | 37.3 |
| Bruchdehnung [%] | 204 | 113 | 41 | 109 | 169 | 39 |
| E-Modul 5% [MPa] | 5.2 | 242 | 440 | 364 | 185 | 754 |
| Weiterreisswiderstand [N/mm] | 11 | 77 | 120 | 111 | 78 | n.b. |
| Shore | 70 A | 95 A | | | 80 A | |
| | 28 D | 58 D | 74 D | 68 D | 49 D | 76 D |
| Tg [°C] | 40 | 65 | 75 | 73 | n.b. | 82 |

| | | | | | | |
|---|---|---|---|---|---|---|
| ¹ Verhältnis der Anzahl Ketoestergruppen der Formel (I) zur Anzahl Aldimingruppen der Formel (II) "n.b." steht für "nicht bestimmt" | | | | | | |

## Patentansprüche

1. Härtbare Zusammensetzung umfassend
- mindestens ein Polyesterpolymer **A** mit Ketoestergruppen der Formel (I), welches in Bezug auf diese Reaktivgruppen eine mittlere Funktionalität von mindestens 2 und ein mittleres Equivalentgewicht von mindestens 400 g/eq aufweist,
- mindestens eine Verbindung **B** mit Ketoestergruppen der Formel (I), welche in Bezug auf diese Reaktivgruppen ein Equivalentgewicht von 114 bis 250 g/eq aufweist, 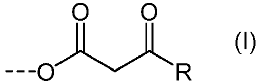 wobei R für einen einwertigen Kohlenwasserstoffrest mit 1 bis 10 C-Atomen steht, und
- mindestens ein Aldimin **L** mit Aldimingruppen der Formel (II) und einem Aldimin-Equivalentgewicht von 110 bis 350 g/eq, 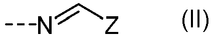 wobei Z für einen aromatischen oder heteroaromatischen fünf- oder sechsgliedrigen Ring steht, der gegebenenfalls substituiert und/oder anelliert ist und insgesamt 4 bis 25 C-Atome umfasst,
wobei das Gewichtsverhältnis zwischen Verbindungen **B** und Polyesterpolymeren **A** bei 25/75 bis 85/15, bevorzugt 30/70 bis 75/25, liegt, und wobei das Verhältnis zwischen der Anzahl Ketoestergruppen der Formel (I) und der Anzahl Aldimingruppen der Formel (II) in der gesamten Zusammensetzung bei 2 bis 3 liegt.

2. Zusammensetzung gemäss Anspruch 1, **dadurch gekennzeichnet, dass** R für Methyl steht und die Ketoestergruppen der Formel (I) somit für Acetoacetatgruppen stehen.

3. Zusammensetzung gemäss einem der Ansprüche 1 bis 2, **dadurch gekennzeichnet, dass** das Polyesterpolymer **A** eine mittlere Funktionalität von 2 bis 3 und ein mittleres Equivalentgewicht von 400 bis 2'500 g/eq, insbesondere 450 bis 1'500 g/eq, aufweist.

4. Zusammensetzung gemäss einem der Ansprüche 1 bis 3, **dadurch gekennzeichnet, dass** das Polyesterpolymer **A** abgeleitet ist von einem amorphen, bei Raumtemperatur flüssigen Polyesterpolyol.

5. Zusammensetzung gemäss einem der Ansprüche 1 bis 3, **dadurch gekennzeichnet, dass** das Polyesterpolymer **A** ein Umsetzungsprodukt von Rizinusöl ist.

6. Zusammensetzung gemäss einem der Ansprüche 1 bis 3, **dadurch gekennzeichnet, dass** das Polyesterpolymer **A** ein amorpher Polyester aus der Veresterung einer Dimerfettsäure oder Trimerfettsäure oder eines Dimerfettalkohols oder Trimerfettalkohols ist.

7. Zusammensetzung gemäss einem der Ansprüche 1 bis 6, **dadurch gekennzeichnet, dass** das Polyesterpolymer **A** bei Raumtemperatur flüssig ist.

8. Zusammensetzung gemäss einem der Ansprüche 1 bis 7, **dadurch gekennzeichnet, dass** die Verbindung **B** ausgewählt ist aus der Liste bestehend aus 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Isosorbid-diacetoacetat, 4,4'-Isopropyliden-bis(cyclohexanol)diacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat und dem Triacetoacetat von propoxyliertem 1,1,1-Trimethylolpropan mit insgesamt einem mittleren Molekulargewicht Mₙ von 500 bis 750 g/mol.

9. Zusammensetzung gemäss einem der Ansprüche 1 bis 8, **dadurch gekennzeichnet, dass** Z für Phenyl steht.

10. Zusammensetzung gemäss einem der Ansprüche 1 bis 9, **dadurch gekennzeichnet, dass** das Aldimin L ein Aldimin der Formel (III) ist, 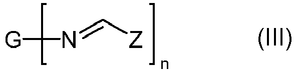
wobei n für 2 oder 3 und G für einen n-wertigen organischen Rest mit 2 bis 25 C-Atomen stehen,
insbesondere ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondiamin, N,N'-Dibenzyliden-4,4'-methylen-bis(cyclohexylamin), N,N'-Dibenzylidenpolyoxy-propylendiaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, 4-Methoxybenzaldehyd, Furfural und 5-Hydroxymethylfurfural anstelle von Benzaldehyd.

11. Zusammensetzung gemäss einem der Ansprüche 1 bis 10, **dadurch gekennzeichnet, dass** bezogen auf die gesamte Zusammensetzung weniger als 10 Gewichts-%, bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel, enthalten sind.

12. Zusammensetzung gemäss einem der Ansprüche 1 bis 11, **dadurch gekennzeichnet, dass** die Zusammensetzung eine Komponente **K1** und eine Komponente **K2** umfasst, welche jeweils für sich allein lagerstabil sind und in voneinander getrennten Gebinden gelagert werden, wobei Verbindungen mit Ketoestergruppen der Formel (I) Bestandteil der Komponente **K1** und Aldimine mit Aldimingruppen der Formel (II) Bestandteil der Komponente **K2** sind.

13. Ausgehärtete Zusammensetzung erhalten aus der härtbaren Zusammensetzung gemäss einem der Ansprüche 1 bis 12 nach dem Vermischen der Inhaltsstoffe oder Komponenten und anschliessendem Aushärten.

14. Ausgehärtete Zusammensetzung gemäss Anspruch 13, **dadurch gekennzeichnet, dass** die Bruchdehnung mindestens 5 %, bevorzugt mindestens 10 %, besonders bevorzugt mindestens 20 %, insbesondere mindestens 40 %, beträgt, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min, und dass der Weiterreisswiderstand mindestens 20 N/mm, insbesondere mindestens 40 N/mm, beträgt, bestimmt gemäss DIN ISO 34-1 Verfahren B (winkelförmiger Prüfkörper) bei einer Probendicke von 2 mm und einer Zuggeschwindigkeit von 500 mm/min.

15. Verwendung der härtbaren Zusammensetzung gemäss einem der Ansprüche 1 bis 12 als Klebstoff, Dichtstoff oder Beschichtung, wobei die Inhaltsstoffe oder Komponenten miteinander vermischt werden und die vermischte Zusammensetzung im flüssigen Zustand auf mindestens ein Substrat appliziert wird.
